# FASCICULE DE BREVET EUROPEEN

(11) **EP 1 090 785 B1**
(45) Date de publication et mention de la délivrance du brevet: **04.06.2003**
(21) Numéro de dépôt: 00121893.2
(22) Date de dépôt: 06.10.2000
(51) Int. Cl.: B60H 1/00

(54) **Boitier perfectionné de traitement d'air d'un habitacle, notamment de véhicule automobile**
Verbessertes Luftbehandlungsgehäuse eines Innenraums insbesondere eines Kraftfahrzeugs
Improved air handling housing for the interior of, in particular, a motor vehicle

(30) Priorité: 08.10.1999 FR 9912566
(43) Date de publication de la demande: 11.04.2001
(73) Titulaire: VALEO CLIMATISATION, 78321 La Verrière (FR)
(72) Inventeur: Auvity, Michel, 78140 Velizy (FR); Grellier, Michel, 94260 Fresnes (FR); Giordano, Giancarlo, 75014 Paris (FR)
(74) Mandataire: Gérard, Michel

(56) Documents cités:
- EP-A- 0 756 955
- FR-A- 2 479 106
- FR-A- 2 740 398
- US-A- 5 109 755

## Description

L'invention concerne les installations de chauffage et/ou climatisation d'un habitacle, notamment de véhicule automobile, subdivisé en zones dites "avant" et "arrière".

Certains de ces boîtiers de traitement, voir par exemple EP756955, comprennent une entrée qui les alimente en air frais, au moins un canal avant pour délivrer de l'air traité à une première sortie d'alimentation d'une première partie d'une zone avant de l'habitacle, au moins une seconde sortie pour alimenter en air traité une seconde partie de cette zone avant, une chambre de mixage, alimentant la première sortie et le canal avant, et une chambre de chauffage, alimentant en air réchauffé la chambre de mixage et alimentée, tout comme cette chambre de mixage, par l'entrée d'air frais.

La première partie de la zone avant désigne généralement la zone de dégivrage du pare-brise, tandis que la seconde partie de cette zone avant désigne généralement les zones d'aération droite et gauche des pieds et/ou la zone d'aération médiane de la planche de bord du véhicule. Mais, il peut en être autrement.

La distribution de l'air traité au niveau de la zone arrière se fait généralement par un conduit rapporté, extérieur au boîtier de distribution, et alimenté par une sortie spécifique. Une telle configuration accroît l'encombrement du compartiment moteur et/ou de l'habitacle, ainsi que la complexité du boîtier ou encore le nombre de modèles de boîtiers.

L'invention a donc pour but d'améliorer la situation. L'invention permet aussi une standardisation de la fabrication des appareils de climatisation avec ou sans aération pour l'arrière du véhicule.

Elle propose à cet effet un boîtier de traitement d'air du type de celui décrit en introduction, dans lequel on prévoit un canal arrière alimenté par la chambre de mixage et destiné à délivrer de l'air traité à une troisième sortie d'alimentation de la zone arrière de l'habitacle.

Dans une application préférentielle, le canal avant est destiné à alimenter en air traité les parties droite et gauche de la zone avant de l'habitacle d'un véhicule automobile (les parties étant par exemple les zones d'aération médianes ou basses).

De la sorte, une partie de l'air traité destiné, par exemple, aux zones avant d'aération des pieds peut être prélevée directement dans la chambre de mixage pour alimenter la zone arrière. Cela permet de réduire l'encombrement tout en simplifiant l'architecture du boîtier de traitement d'air.

Dans un mode de réalisation préférentiel, le boîtier selon l'invention est formé de deux demi-coques assemblées. Dans ce cas, il est avantageux que le canal arrière soit un conduit rapporté formé d'une ou deux pièces et logé dans le canal avant. Cela permet en effet de partir des boîtiers de distribution d'air traité classiques que l'on découpe pour former la seconde sortie et dans lesquels on loge le conduit avant d'accoupler les deux demi-coques. Mais, le canal arrière pourrait être délimité par une paroi rapportée coopérant avec une paroi du boîtier.

Selon une autre caractéristique de l'invention, le boîtier peut comporter un canal auxiliaire, par exemple un conduit rapporté, muni d'une première extrémité, prélevant de l'air frais entre l'entrée d'air frais et la chambre de mixage, et d'une seconde extrémité, délivrant cet air frais prélevé au voisinage de l'entrée du canal arrière.

Dans la description qui suit, faite à titre d'exemple, on se réfère aux dessins annexés, sur lesquels :
- la figure 1 est une vue en coupe transversale schématique d'un boîtier de traitement d'air selon l'invention;
- la figure 2 illustre, dans une vue en perspective, un boîtier de distribution selon l'invention;
- la figure 3 illustre, dans une vue en perspective, un boîtier de distribution selon l'invention, en cours d'assemblage;
- la figure 4 illustre, dans une vue en coupe, une première variante de réalisation d'un canal arrière;
- la figure 5 illustre, dans une vue en coupe, une seconde variante de réalisation d'un canal arrière; et
- la figure 6 est une vue en coupe suivant l'axe VI-VI de la figure 1.

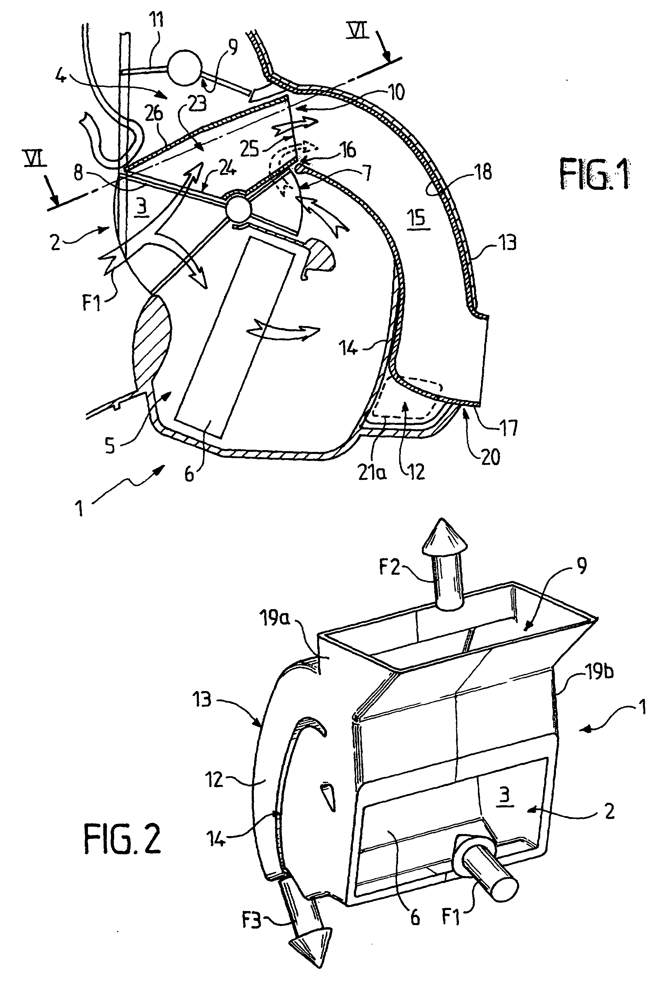

On se réfère tout d'abord aux figures 1 à 3 pour décrire, de façon non limitative, un boîtier selon l'invention, destiné à traiter de l'air dans une installation de chauffage et/ou climatisation d'un habitacle de véhicule automobile.

Le boîtier de traitement d'air 1, illustré à titre d'exemple sur les figures 1 à 3, est alimenté en air frais (recirculé ou extérieur) par un groupe motoventilateur (non représenté). Il comprend donc une entrée 2 par laquelle pénètre l'air frais (flèche F1), et qui alimente une chambre d'alimentation 3.

Cette chambre d'alimentation 3 communique avec une chambre de mixage 4 et une chambre de chauffage 5. La chambre de chauffage 5 comporte un radiateur 6 destiné à réchauffer l'air frais issu de la chambre d'alimentation 3, et une sortie 7 qui alimente la chambre de mixage 4 en air réchauffé. Les deux accès à la chambre de mixage 4 sont, dans l'exemple illustré sur la figure 1, contrôlés par un unique volet de mixage 8, de forme adaptée à cet effet.

La chambre de mixage 4 comporte au moins deux sorties, une première sortie 9 destinée à alimenter en air traité (voir flèche F2 de la figure 2) une première partie de la zone avant de l'habitacle du véhicule automobile, et une seconde sortie 10 qui alimente en air traité (voir flèche F3 de la figure 2) une seconde partie de cette zone avant. Par exemple, la première partie comporte la zone de dégivrage (située juste au dessus de la planche de bord du véhicule) et la zone d'aération médiane (planche de bord), tandis que la seconde partie désigne la zone d'aération pieds. Dans cet exemple, l'accès à la première sortie 9 est contrôlé par un volet de type drapeau 11.

Dans le mode de réalisation illustré sur les figures 1 à 3, la seconde sortie 10 alimente un canal dit "avant" 12, délimité par des parois externe 13 et interne 14 du boîtier 1, et destiné à alimenter, par deux sorties 21 formées dans la paroi externe 13 du boîtier 1, deux conduits (non représentés) qui alimentent, dans l'exemple de réalisation illustré, les parties droite et gauche d'aération pieds (seconde partie de la zone avant de l'habitacle).

Selon l'invention, le boîtier comporte un canal dit "arrière" 15 comprenant une première extrémité 16 débouchant dans la chambre de mixage en un endroit choisi, et une seconde extrémité 17 pour délivrer l'air traité, via une ouverture 20 (troisième sortie) formée dans la paroi externe 13 du boîtier 1, à un conduit de distribution (non représenté) destiné à alimenter la zone arrière de l'habitacle.

Le canal arrière 15 peut comporter une double paroi, ou bien être recouvert d'un matériau thermiquement isolant, de manière à limiter les transferts thermiques entre l'air qui circule à l'intérieur (15) et l'air qui circule dans le canal (ou les canaux) avant 12.

De préférence, le boîtier 1 est destiné à être logé en position sensiblement centrale dans le compartiment moteur pour que le canal arrière 15 puisse alimenter un conduit de distribution logé dans la console placée entre les sièges avant.

Dans le mode de réalisation illustré sur les figures 1 à 3, le canal arrière 15 est délimité par un conduit 18 logé à l'intérieur du canal avant 12. Le canal arrière est donc ici alimenté par la seconde sortie 10.

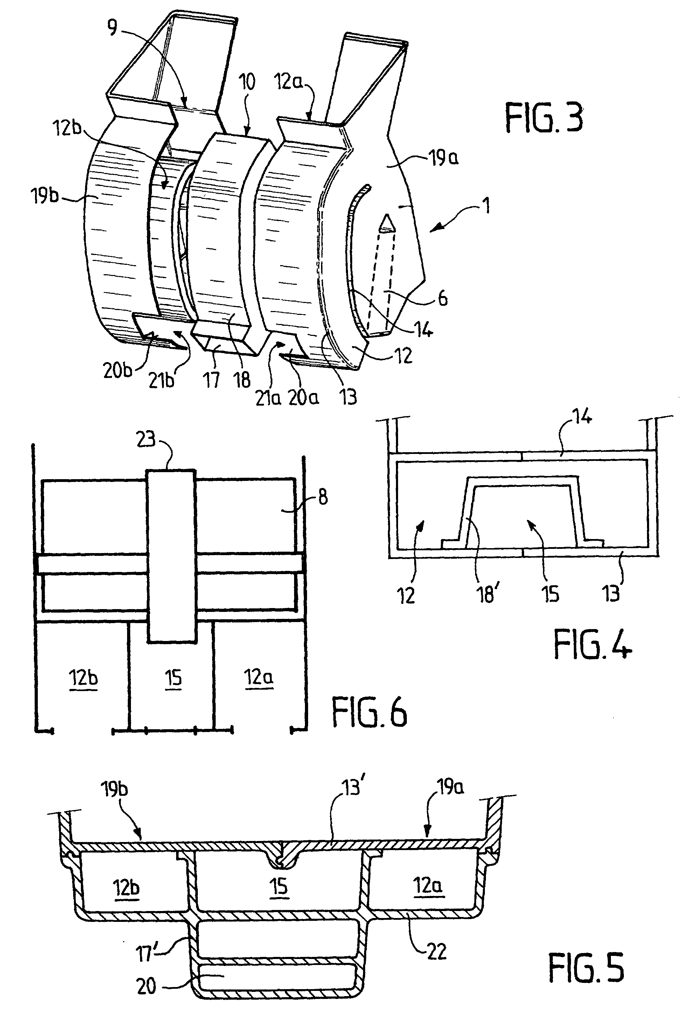

Préférentiellement, comme illustré sur la figure 3, le boîtier de traitement 3 est réalisé par assemblage de deux demi-coques 19a et 19b qui délimitent conjointement, l'entrée d'air 2, le canal avant 12, et les sorties 9, 20 et 21.

Avantageusement, dans ce mode de réalisation, le conduit 18 est logé pour une première moitié dans le demi-canal que délimite la demi-coque 19a et pour une seconde moitié dans le demi-canal que délimite la demi-coque 19b. Du fait de ce positionnement dans le canal avant 12, le conduit 18 subdivise ledit canal avant 12 en deux sous-canaux 12a et 12b qui alimentent respectivement deux sous-sorties 21a et 21b.

Ce mode de réalisation présente un réel intérêt dans la mesure où il permet de partir des demi-coques des boîtiers de traitement d'air de la technique antérieure. Il suffit en effet de former, par exemple par découpe, une demi-sortie 20a ou 20b dans la paroi externe 13 de chaque demi-coque 19a ou 19b, pour réaliser la seconde sortie 20 une fois les deux demi-coques 19a et 19b assemblées.

Le conduit 18 est illustré sous la forme d'une pièce rapportée monobloc présentant, de préférence, une section transverse rectangulaire ou carrée. Mais il pourrait être réalisé par assemblage de deux pièces, et sa forme et son mode de réalisation pourraient être différents.

Ainsi, comme illustré sur la figure 4, le canal 15 peut être délimité conjointement par un conduit "ouvert" 18', de section transverse en U, et par la face interne de la paroi externe 13 du boîtier 1. Comme cela est illustré, le conduit 18' ne subdivise pas forcément le canal avant 12 en deux sous-canaux indépendants. Sa forme est donc adaptée aux besoins. Dans une variante de réalisation, on peut même envisager que le canal arrière 15 soit placé latéralement dans le canal avant 12. Dans ce cas, une simple cloison peut suffire à délimiter les canaux avant 12 et arrière 15.

Dans une autre forme de réalisation, illustrée sur la figure 5, les deux canaux avant 12a et 12b et le canal arrière 15 sont délimités conjointement par une paroi 22 conformée, rapportée, qui coopère avec la face externe de la paroi externe 13' du boîtier 1. Cette paroi rapportée 22 comporte, dans une partie inférieure, une extension, sensiblement perpendiculaire, qui prolonge le canal arrière 15 en formant une sorte d'extrémité 17' du type de l'extrémité 17 du conduit 18 (voir figure 1). Cette extrémité 17' se termine par la sortie 20.

Dans un tel mode de réalisation, le boîtier comprend donc, au niveau de la paroi délimitant sa chambre de mixage 5, une ouverture, formant sortie d'alimentation des deux canaux avant 12a et 12b et du canal arrière 15.

Par ailleurs, dans l'exemple illustré sur la figure 5, le canal arrière 15 est formé entre les deux canaux avant 12a et 12b sensiblement identiques, mais d'autres dispositions peuvent être envisagées. Par exemple les deux canaux avant pourront être différents l'un de l'autre, ou bien ils pourront être l'un à côté de l'autre. On peut également envisager un boîtier muni d'un unique canal avant et du canal arrière.

Par ailleurs, et bien que cela ne soit pas représenté sur les figures 1 et 2, on pourra prévoir aux deux extrémités du canal arrière 15 (ou du conduit qui le délimite au moins partiellement), au niveau de ses entrée et sortie, un joint d'étanchéité de manière, notamment, à isoler les flux d'air destinés respectivement à la zone arrière et aux zones avant droite et gauche.

D'autre part, comme cela est illustré sur la figure 1, le boîtier de traitement 1 peut comporter, de préférence dans sa chambre de mixage 4, un canal auxiliaire 23 comprenant une première extrémité 24 destinée à prélever de l'air frais dans la chambre d'alimentation 3, ou en sortie de celle-ci, ainsi qu'une seconde extrémité 25 destinée à alimenter en air frais le canal arrière 15, au moins. Bien entendu, dans ce mode de réalisation, la forme du volet de mixage 8 doit être adaptée à la forme du conduit auxiliaire 23, et notamment à celle de ses extrémités 24 et 25. Ce volet de mixage peut également comporter des aubes destinées à favoriser l'acheminement d'air chaud vers l'une au moins des sorties de la chambre de mixage. De préférence, le canal auxiliaire 23 est délimité par un conduit auxiliaire 26.

De la sorte, il est possible d'instaurer une différence de température entre le flux d'air destiné aux zones d'aération avant et le flux d'air destiné à la zone arrière.

L'invention ne se limite pas aux modes de réalisation décrits ci-avant, seulement à titre d'exemple, mais elle embrasse toute les variantes que pourra développer l'homme de l'art dans le cadre des revendications ci-après.

Ainsi, on a décrit un mode de réalisation dans lequel le boîtier est constitué de deux demi-coques qui délimitent avec le conduit intégré deux sous-canaux avant pour alimenter les zones avant droite et gauche. Cependant, le boîtier pourra délimiter initialement deux canaux alimentés par une unique entrée, ou par deux entrées indépendantes, et alimentant deux sorties indépendantes.

## Revendications

1. Boîtier de traitement d'air d'un habitacle, notamment de véhicule automobile, comprenant une entrée (2) d'alimentation en air frais, une première sortie (9) d'alimentation d'une première partie d'une zone avant de l'habitacle, au moins un canal avant (12), au moins une seconde sortie (10) propre à alimenter en air traité ledit canal avant (12) destiné à délivrer de l'air traité à une seconde partie de ladite zone avant, une chambre de mixage (4) et une chambre de chauffage (5) alimentées par ladite entrée (2), ladite chambre de chauffage (5) étant propre à alimenter en air réchauffé ladite chambre de mixage (4), laquelle alimente ladite première sortie (9) et ledit canal avant (12),
**caractérisé en ce que** le boîtier comporte un canal arrière (15) alimenté par ladite chambre de mixage (4) et destiné à délivrer de l'air traité au niveau d'une troisième sortie (20) d'alimentation d'une zone arrière de l'habitacle.

2. Boîtier selon la revendication 1, **caractérisé en ce qu'**il est formé de deux demi-coques assemblées (19a,19b).

3. Boîtier selon la revendication 2, **caractérisé en ce que** ladite troisième sortie (20) est réalisée par découpe des parois des deux demi-coques (19a,19b).

4. Boîtier selon l'une des revendications 1 à 3, **caractérisé en ce qu'**il comporte deux canaux avant (12a,12b) alimentant deux premières sorties (21a,21b).

5. Boîtier selon la revendication 4, **caractérisé en ce que** lesdits canaux avant (12a,12b) sont placés de part et d'autre du canal arrière (15).

6. Boîtier selon l'une des revendications 4 et 5, **caractérisé en ce que** ledit canal arrière (15) et lesdits canaux avant (12a,12b) sont délimités conjointement par une paroi (22) rapportée qui coopère avec une autre paroi (13') dudit boîtier.

7. Boîtier selon l'une des revendications 1 à 3, **caractérisé en ce que** ledit canal arrière (15) est délimité par un conduit (18,18') logé dans ledit canal avant (12).

8. Boîtier selon l'une des revendications 4 à 7, **caractérisé en ce que** ledit canal arrière (15) présente une section transverse sensiblement rectangulaire.

9. Boîtier selon l'une des revendications 7 et 8, **caractérisé en ce que** ledit conduit (18) est agencé de manière à délimiter deux sous-canaux avant (12a,12b) dans ledit canal avant (12) et deux premières sous-sorties (21a,21b) de ces sous-canaux avant.

10. Boîtier selon la revendication 9, **caractérisé en ce que** ledit conduit (18') présente une section transverse sensiblement en U et délimite le canal arrière (11) conjointement avec une paroi (13) dudit boîtier, qui délimite ledit canal avant (12).

11. Boîtier selon l'une des revendications 1 à 10, **caractérisé en ce qu'**il comporte un canal auxiliaire (23) muni d'une première extrémité (24) propre à prélever de l'air frais entre ladite entrée d'air frais (2) et la chambre de mixage (4) et d'une seconde extrémité (25) propre à délivrer cet air frais prélevé au voisinage de l'entrée (16) du canal arrière (15).

12. Boîtier selon la revendication 11, **caractérisé en ce que** ledit canal auxiliaire (23) est délimité par un conduit auxiliaire (26).

13. Boîtier selon l'une des revendications 1 à 12, **caractérisé en ce que** ledit canal arrière (15) comporte un joint d'étanchéité en l'une au moins de ses extrémités (16,17).

14. Boîtier selon l'une des revendications 1 à 13, **caractérisé en ce que** ledit canal arrière (15) comporte une double paroi propre à limiter les transferts thermiques entre l'air circulant dans ledit canal arrière (15) et l'air circulant dans ledit canal avant (12).

15. Boîtier selon l'une des revendications 1 à 13, **caractérisé en ce que** ledit canal arrière (15) est recouvert d'un matériau thermiquement isolant propre à limiter les transferts thermiques entre l'air circulant dans ledit canal arrière (15) et l'air circulant dans ledit canal avant 12.

16. Utilisation d'un boîtier selon l'une des revendications 4 à 15, pour la distribution d'air traité par lesdits premier (12a) et second (12b) canaux ou sous-canaux avant dans des parties droite et gauche de la zone avant de l'habitacle.

17. Utilisation selon la revendication 16, dans laquelle lesdites parties droite et gauche sont des zones d'aérations.

## Patentansprüche

1. Gehäuse zur Behandlung von Luft fiir einen Innenraum, insbesondere eines Kraftfahrzeuges, umfassend einen Eintritt (2) zur Versorgung mit Frischluft, einen ersten Austritt (9) zur Versorgung eines ersten Teiles einer Frontzone des Innenraumes, zumindest einen Frontkanal (12), zumindest einen zweiten Austritt (10), geeignet zur Versorgung mit behandelter Luft des Frontkanals(12), bestimmt zum Liefern von behandelter Luft zu einem zweiten Teil der Vorder- oder Frontzone, eine Mischkammer (4) und eine Heizkammer (5); die von dem Eintritt (2) versorgt sind, wobei die Heizkammer (5) geeignet ist zur Versorgung der Mischkammer (4) mit erwärmter Luft, wobei die Mischkammer (4) den ersten Austritt (9) und den Frontkanal (12) versorgt oder beschickt, **dadurch gekennzeichnet, dass** das Gehäuse einen hinteren oder Heckkanal (15) umfasst, versorgt oder beschickt von der Mischkammer (4) und bestimmt zum Liefern von behandelter Luft auf dem Niveau eines dritten Austrittes (20), zur Versorgung einer hinteren oder Heckzone des Innenraums. .

2. Gehäuse nach Anspruch 1, **dadurch gekennzeichnet, dass** es aus zwei zusammengebauten Halbschalen (19a, 19b) gebildet ist.

3. Gehäuse nach Anspruch 2, **dadurch gekennzeichnet, dass** der dritte Austritt (20) dargestellt ist, mittels eines Ausschnittes von Wandungen der zwei Halbschalen (19a, 19b).

4. Gehäuse nach einem der Ansprüche 1 bis 3, **dadurch gekennzeichnet, dass** es zwei Forderoder Frontkanäle (12a, 12b) umfasst, zwei erste Austritte (21a, 21b) versorgend.

5. Gehäuse nach Anspruch 4, **dadurch gekennzeichnet, dass** die zwei Frontkanäle (12a, 12b) beidseitig des Heckkanals (15)angeordnet sind.

6. Gehäuse nach einem der Ansprüche 4 und 5, **dadurch gekennzeichnet, dass** der Heckkanal (15) und die Frontkanäle (12a, 12b) gemeinsam durch eine befestigte Wand (22) begrenzt sind, die mit einer anderen Wandung (13`) des Gehäuses wechselwirkt.

7. Gehäuse nach einem der Ansprüche 1 bis 3, **dadurch gekennzeichnet, dass** der Heckkanal (15) von einer Führung (18, 18') begrenzt ist, die in dem Frontkanal (12) aufgenommen ist.

8. Gehäuse nach einem der Ansprüche 4 bis 7, **dadurch gekennzeichnet, dass** der Heckkanal (15) eine im wesentlichen rechteckförmige Querschnittsform aufweist.

9. Gehäuse nach einem der Ansprüche 7und 8, **dadurch gekennzeichnet, dass** die Führung, bzw. die Leitung (18) derart ausgebildet ist, dass zwei Unterfrontkanäle (12a, 12b) in dem Frontkanal (12) sowie zwei Unteraustritte (21a, 21b) dieser Unterfrontkanäle ausgebildet sind. '

10. Gehäuse nach Anspruch 9, **dadurch gekennzeichnet, dass** die Führung oder Leitung (18') eine im wesentlichen U-förmige Querschnittsform aufweist und den Heckkanal (11) gemeinsam mit einer Wandung (13) des Gehäuses begrenzt, die den Frontkanal (12) begrenzt.

11. Gehäuse nach einem der Ansprüche 1 bis 10, **dadurch gekennzeichnet, dass** es einen Hilfskanal (23) umfasst, bereitgestellt mit einem ersten Ende (24), geeignet zum Entnehmen von Frischluft zwischen dem Frischlufteintritt (2) und der Mischkammer (4), sowie mit einem zweiten Ende (25), geeignet zum Liefern dieser entnommenen Frischluft, benachbart zu dem Eintritt (16) des Heckkanals (15).

12. Gehäuse nach Anspruch 11, **dadurch gekennzeichnet, dass** der Hilfskanal (23) von einer Hilfsleitung oder-führung (26) begrenzt ist.

13. Gehäuse nach einem der Ansprüche 1 bis 12, **dadurch gekennzeichnet, dass** der Heckkanal (15) eine Dichtung an zumindest einem seiner Enden (16, 17) umfässt.

14. Gehäuse nach einem der Ansprüche 1 bis 13, **dadurch gekennzeichnet, dass** der Heckkanal (15) eine Doppelwandung umfasst, geeignet zum Beschränken der thermischen Übergänge zwischen der .Luft, die in dem Heckkanal (15) zirkuliert und der Luft, die in dem Frontkanal (12) zirkuliert.

15. Gehäuse nach einem der Ansprüche 1 bis 13, **dadurch gekennzeichnet, dass** der Heckkanal (15) von einem thermisch isolierenden Material bedeckt ist, geeignet zum Begrenzen eines thermischen Austausches zwischen der Luft, die in dem Heckkanal (15) zirkuliert und der Luft, die in dem Frontkanal (12) zirkuliert.

16. Verwendung des Gehäuses nach einem der Ansprüche 4 bis 15, zur Verteilung von behandelter Luft durch die ersten (12a) und zweiten (12b) Kanäle oder Unterkanäle für den Frontbereich im rechten und linken Teilen der Frontzone des Innenraumes:

17. Verwendung nach Anspruch 16, wobei die rechten und linken Zonen Belüftungszonen sind.

## Claims

1. Air treatment housing in a cabin, in particular in a motor vehicle, comprising an inlet (2) supplying fresh air, a first outlet (9) supplying a first part of a front area of the cabin, at least one front channel (12), at least one second outlet (10) able to supply with treated air the said front channel (12) intended to deliver treated air to a second part of the said front area, a mixing chamber (4) and a heating chamber (5) supplied by the said inlet (2), the said heating chamber (5) being able to supply heated air to the said mixing chamber (4.), which supplies the said first outlet (9) and the said front channel (12),
**characterised in that** the housing comprises a rear channel (15) supplied by the said mixing chamber (4) and intended to deliver treated air at a third outlet (20) for supplying a rear area of the cabin.

2. Housing according to Claim 1, **characterised in that** it is formed by two connected half-shells (19a, 19b).

3. Housing according to Claim 2, **characterised in that** the said third outlet (20) is produced by cutting the walls of the two half-shells (19a, 19b).

4. Housing according to one of Claims 1 to 3, **characterised in that** it comprises two front channels (12a, 12b) supplying two first outlets (21a, 21b).

5. Housing according to Claim 4, **characterised in that** the said front channels (12a, 12b) are placed on each side of the rear channel (15).

6. Housing according to one of Claims 4 and 5, **characterised in that** the said rear channel (15) and the said front channels (12a, 12b) are delimited conjointly by an attached wall (22) which cooperates with another wall (13') of the said housing.

7. Housing according to one of Claims 1 to 3, **characterised in that** the said rear channel (15) is delimited by a conduit (18, 18') housed in the said front channel (12).

8. Housing according to one of Claims 4 to 7, **characterised in that** the said rear channel (15) has a substantially rectangular transverse section.

9. Housing according to one of Claims 7 and 8, **characterised in that** the said conduit (18) is arranged so as to delimit two front subchannels (12a, 12b) in the said front channel (12) and two first suboutlets (21a, 21b) of these front subchannels.

10. Housing according to Claim 9, **characterised in that** the said conduit (18') has a substantially U-shaped transverse section and delimits the rear channel (11) conjointly with a wall (13) of the said housing which delimits the said front channel (12).

11. Housing according to one of Claims 1 to 10, **characterised in that** it comprises an auxiliary channel (23) provided with a first end (24) able to take off fresh air between the said fresh-air inlet (2) and the mixing chamber (4) and with a second end (25) able to deliver this fresh air taken off close to the inlet (16) of the rear channel (15).

12. Housing according to Claim 11, **characterised in that** the said auxiliary channel (23) is delimited by an auxiliary conduit (26) .

13. Housing according to one of Claims 1 to 12, **characterised in that** the said rear channel (15) comprises a sealing joint at at least one of its ends (16, 17).

14. Housing according to one of Claims 1 to 13, **characterised in that** the said rear channel (15) comprises a double wall able to limit heat transfers between the air circulating in the said rear channel (15) and the air circulating in the said front channel (12).

15. Housing according to one of Claims 1 to 13, **characterised in that** the said rear channel (15) is covered with a heat-insulating material able to limit heat transfers between the air circulating in the said rear channel (15) and the air circulating in the said front channel (12).

16. Use of a housing according to one of Claims 4 to 15 for the distribution of treated air by the said first (12a) and second (12b) front channels or subchannels in the right- and left-hand parts of the front area of the cabin.

17. Use according to Claim 16, in which the said right- and left-hand parts are ventilation areas.
